# EUROPEAN PATENT APPLICATION

(11) **EP 3 984 654 A1**
(43) Date of publication of application: **20.04.2022**
(21) Application number: 19933031.7
(22) Date of filing: 11.06.2019
(51) Int. Cl.: B05C 11/10, B05C 5/00, B05B 12/00

(54) **CONTROL SYSTEM, MONITORING DEVICE, MONITORING METHOD, AND PROGRAM**

(71) Applicant: Kabushiki Kaisha Yaskawa Denki, Kitakyushu-shi, Fukuoka 806-0004 (JP)
(72) Inventor: ISHIZU Kensei, Kitakyushu-shi, Fukuoka 806-0004 (JP); TABATA Makoto, Kitakyushu-shi, Fukuoka 806-0004 (JP); NAKATA Tatsuya, Kitakyushu-shi, Fukuoka 806-0004 (JP); KIKUCHI Kenta, Kitakyushu-shi, Fukuoka 806-0004 (JP); ITO Tsuyoshi, Kitakyushu-shi, Fukuoka 806-0004 (JP)
(74) Representative: BRP Renaud & Partner mbB Rechtsanwälte Patentanwälte Steuerberater
(86) International application number: PCT/JP2019/023138
(87) International publication number: WO 2020/250306

(57) **Abstract**

A control system (70) according to an aspect of the present disclosure includes a discharge control unit (80) configured to control an application device (40) such that a coating is discharged from a discharge unit (41); a robot control unit (90) configured to cause an articulated robot (10) to change a position and an orientation of the discharge unit (41) such that the coating discharged by the discharge unit (41) is applied to a workpiece (W); an application abnormality detection unit (108) configured to detect an abnormality in an application state of the coating on the basis of at least one of a state of the application device (40) or a state of the articulated robot (10); an application position calculation unit (106) configured to calculate an application position of the coating, on the workpiece (W), applied from the discharge unit (41) on the basis of the state of the articulated robot (10); and an abnormality notification unit (120) configured to send a notification of a site of an abnormality in the application state on the workpiece (W) on the basis of a detection result of the abnormality in the application state and a calculation result of the application position.

## Description

### Technical Field

The present disclosure relates to a control system, a monitoring device, a monitoring method, and a program.

### Background Art

An application device for applying a viscous material to an application target is described in Patent Document 1. The application device includes a nozzle device that discharges a viscous material from a nozzle onto the application target, and a moving means that moves the nozzle device relative to the application target. The moving means is an articulated robot configured to move the nozzle device relative to the application target via the operation of each joint.

### Citation List

### Patent Literature

Patent Document 1: WO 2013/140814

### Summary of Invention

### Technical Problem

The present disclosure provides a control system, a monitoring device, a monitoring method, and a program useful in early detection of an abnormal section in an application state of a workpiece.

### Solution to Problem

A control system according to an aspect of the present disclosure includes a discharge control unit configured to control an application device such that a coating is discharged from a discharge unit; a robot control unit configured to cause an articulated robot to change a position and an orientation of the discharge unit such that the coating discharged by the discharge unit is applied to a workpiece; an application abnormality detection unit configured to detect an abnormality in an application state of the coating on the basis of at least one of a state of the application device or a state of the articulated robot; an application position calculation unit configured to calculate an application position of the coating, on the workpiece, applied from the discharge unit on the basis of the state of the articulated robot; and an abnormality notification unit configured to send a notification of a site of an abnormality in the application state on the workpiece on the basis of a detection result of the abnormality in the application state and a calculation result of the application position.

A monitoring device according to another aspect of the present disclosure includes a device state acquisition unit configured to acquire a state of an application device including a discharge unit configured to discharge a coating; a robot state acquisition unit configured to acquire a state of an articulated robot configured to change a position and an orientation of the discharge unit such that the coating discharged by the discharge unit is applied to a workpiece; an application abnormality detection unit configured to detect an abnormality in an application state of the coating on the basis of at least one of the state of the application device or the state of the articulated robot; an application position calculation unit configured to calculate an application position of the coating, on the workpiece, applied from the discharge unit on the basis of the state of the articulated robot; and an abnormality notification unit configured to send a notification of a site of the abnormality in the application state on the workpiece on the basis of a detection result of the abnormality in the application state and a calculation result of the application position.

A monitoring method according to another aspect of the present disclosure includes acquiring a state of an application device including a discharge unit configured to discharge a coating; acquiring a state of an articulated robot configured to change a position and an orientation of the discharge unit such that the coating discharged by the discharge unit is applied to a workpiece; detecting an abnormality in an application state of the coating on the basis of at least one of the state of the application device or the state of the articulated robot; calculating an application position of the coating, on the workpiece, applied from the discharge unit on the basis of the state of the articulated robot; and sending a notification of a site of the abnormality in the application state on the workpiece on the basis of a detection result of the abnormality in the application state and a calculation result of the application position.

### Advantageous Effects of Invention

The present disclosure provides a control system, a monitoring device, a monitoring method, and a program useful in early detection of an abnormal section in an application state of a workpiece.

### Brief Description of Drawings

FIG. 1 is a schematic diagram illustrating an example of a configuration of an application system.
FIG. 2 is a schematic diagram illustrating an example of a configuration of an application device.
FIG. 3 is a block diagram illustrating an example of a functional configuration of a control system.
FIG. 4 is a schematic diagram illustrating an example of a state of a coating applied on a workpiece.
FIGS. 5(a) to 5(c) are schematic diagrams illustrating examples of states of a coating at abnormality sites.
FIG. 6 is a block diagram illustrating an example of a hardware configuration of a control system.
FIG. 7 is a flowchart illustrating an example of a process for monitoring an application state.
FIG. 8 is a flowchart illustrating an example of a process for determining whether there is an abnormality.
FIG. 9 is a flowchart illustrating an example of a process for estimating the cause of an abnormality.
FIG. 10 is a flowchart illustrating an example of a process for building an estimation model.
FIG. 11 is a flowchart illustrating an example of a process for determining whether there is an abnormality by using an estimation model.
FIG. 12 is a schematic diagram illustrating another example of a configuration of an application device.

### Description of Embodiments

An embodiment will be described in detail below with reference to the drawings. In the description, elements which are the same or have the same function are given the same reference signs, and redundant descriptions thereof are omitted.

### Application System

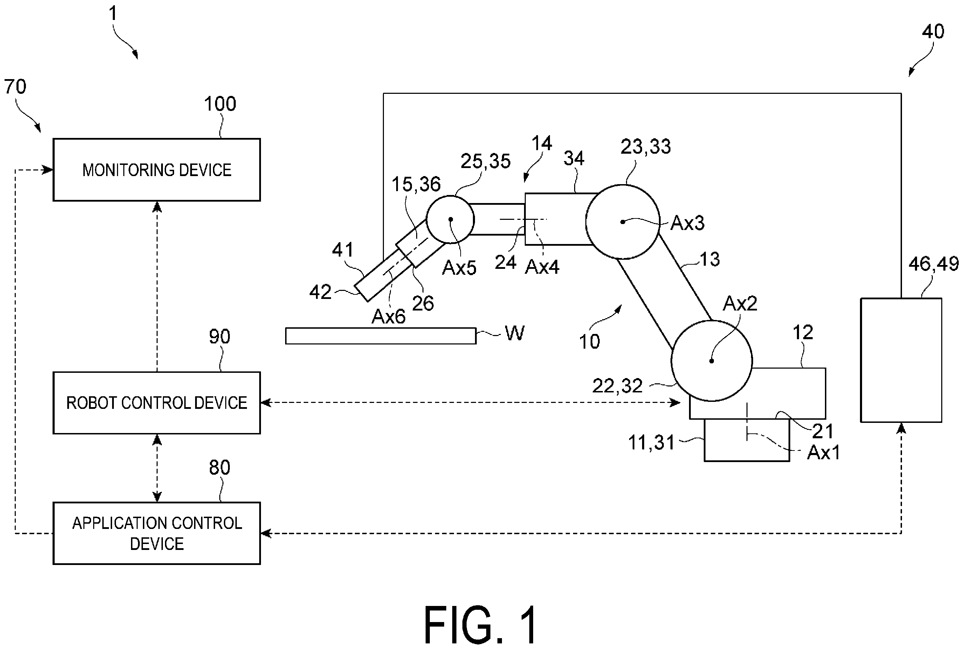

An application system 1 illustrated in FIG. 1 is a system for automatically performing at least a part of an application operation in which a coating is applied to an application object (hereinafter, referred to as "workpiece W") and automatically monitoring the quality of the coating on the workpiece W. The workpiece W is, for example, part of the body of an automobile. Examples of the workpiece W include a floor panel, a roof panel, and a door panel of an automobile. The coating applied to the workpiece W is, for example, a sealant or a vibration damping material that dampens vibration (coating for soundproofing). The vibration damping material may include a material (resin) having viscosity and elasticity. For example, the vibration damping material may include a material having a viscosity at which, at room temperature, the material can maintain its application shape without dripping until the material solidifies. The application system 1 includes an articulated robot 10, an application device 40, and a control system 70.

### Articulated Robot

The articulated robot 10 is, for example, a 6-axis vertical articulated robot including a base portion 11, a swivel portion 12, a first arm 13, a second arm 14, a wrist portion 15, and actuators 31, 32, 33, 34, 35, 36.

The base portion 11 is fixed to a floor or a pedestal having a linear motion mechanism, for example. The swivel portion 12 is provided on the base portion 11 and can swivel about a vertical axis Ax1. That is, the articulated robot 10 includes a joint 21 that allows the swivel portion 12 to swivel about the axis Ax1.

The first arm 13 extends from the swivel portion 12 and can swing about an axis Ax2 that intersects (for example, orthogonally) the axis Ax1. That is, the articulated robot 10 includes a joint 22 that allows the first arm 13 to swing about the axis Ax2. Note that "intersect" used herein includes in its meaning a twisted relationship such as in a so-called three-dimensional intersection. The same applies hereinafter.

The second arm 14 extends from a distal end portion of the first arm 13 and can swing about an axis Ax3 that intersects (for example, orthogonally) the axis Ax1. That is, the articulated robot 10 includes a joint 23 that allows the second arm 14 to swing about the axis Ax3. The axis Ax3 may be parallel with the axis Ax2.

A distal end portion of the second arm 14 can swivel about an axis Ax4 along the extension direction of the second arm 14, the axis Ax4 intersecting (for example, orthogonally) the axis Ax3. That is, the articulated robot 10 includes a joint 24 that allows the distal end portion of the second arm 14 to swivel about the axis Ax4.

The wrist portion 15 extends from the distal end portion of the second arm 14 and can swing about an axis Ax5 that intersects (for example, orthogonally) the axis Ax4. That is, the articulated robot 10 includes a joint 25 that allows the wrist portion 15 to swing about the axis Ax5.

The operation target member is provided at a distal end portion of the wrist portion 15, and the member can swivel about an axis Ax6 along the extension direction of the wrist portion 15, the axis Ax6 intersecting (for example, orthogonally) the axis Ax5. That is, the articulated robot 10 includes a joint 26 that allows the operation target member to swivel about the axis Ax6. The operation target member is a discharge unit 41 (described later) that functions as a gun for discharging the coating.

The actuators 31, 32, 33, 34, 35, 36 drive the joints 21, 22, 23, 24, 25, 26, respectively. For example, the actuator 31 swivels the swivel portion 12 about the axis Ax1, the actuator 32 swings the first arm 13 about the axis Ax2, the actuator 33 swings the second arm 14 about the axis Ax3, the actuator 34 swivels the distal end portion of the second arm 14 about the axis Ax4, the actuator 35 swings the wrist portion 15 about the axis Ax5, and the actuator 36 swivels the operation target member about the axis Ax6.

Note that the articulated robot 10 can be configured in a discretionary manner as long as the position and orientation of the operation target member can be changed within the desired range. For example, the articulated robot 10 may be a 7-axis vertical articulated robot, which is the 6-axis vertical articulated robot described above with a redundant axis.

### Application Device

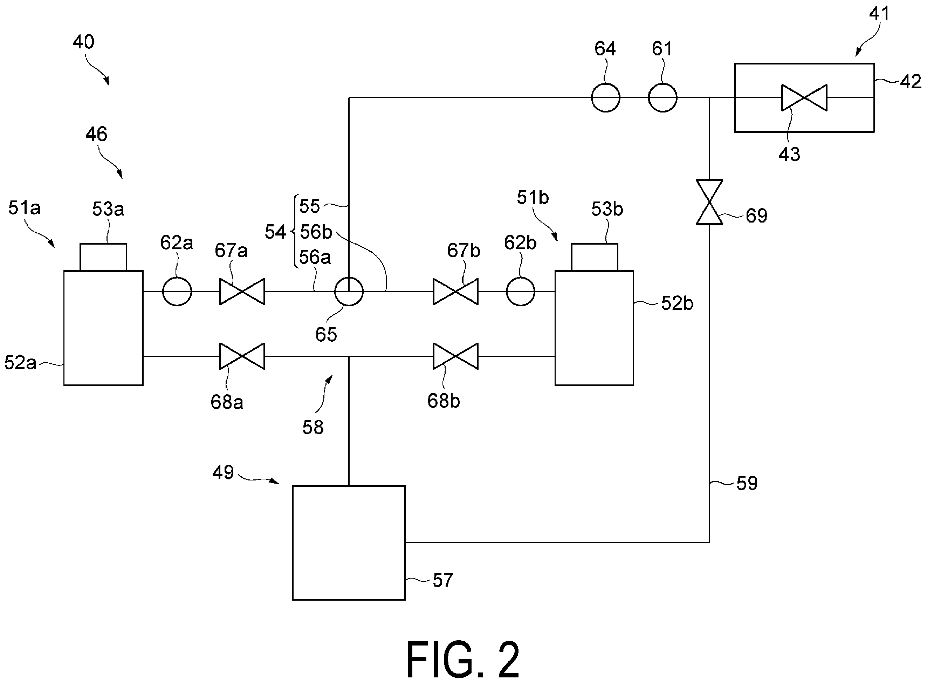

The application device 40 is a device that cooperates with the articulated robot 10 to apply the coating to the workpiece W. As illustrated in FIG. 2, the application device 40 includes the discharge unit 41, a pressure feeding unit 46, and a supply unit 49.

The discharge unit 41 discharges the coating. The discharge unit 41 is provided at the distal end portion of the wrist portion 15 of the articulated robot 10. In other words, the position and the orientation of the discharge unit 41 are changed by the operation of the articulated robot 10. An outlet may be provided in a distal end face 42 of the discharge unit 41. When the position and the orientation of the discharge unit 41 are changed by the articulated robot 10, the discharge position and the discharge direction of the coating discharged from the outlet change.

The discharge unit 41 includes a discharge valve 43. The discharge valve 43 switches a state of the discharge unit 41, by an open/close operation, between a state in which the coating is discharged from the discharge unit 41 (outlet) and a state in which the coating is not discharged from the discharge unit 41. The discharge valve 43 is, for example, an air operated valve, and an air tube for feeding air for the open/close operation is connected to the discharge valve 43. The discharge valve 43 may have a function of outputting a signal indicating its open/closed state. Note that the discharge unit 41 may not include the discharge valve 43. In this case, the valve (for example, delivery valve 67a or 67b described below) located upstream of the discharge unit 41 may switch the state of the discharge unit 41 between a state in which the coating is discharged from the discharge unit 41 and a state in which the coating is not discharged from the discharge unit 41.

The pressure feeding unit 46 pressure-feeds the coating to the discharge unit 41. The pressure feeding unit 46 includes pumps 51a, 51b, a liquid feeding pipe 54, and the delivery valves 67a, 67b.

The pump 51a and the pump 51b have a similar configuration and a similar function. The pumps 51a, 51b each receive the coating via a suction operation and deliver the coating to be discharged to the workpiece W to the discharge unit 41. The pumps 51a, 51b are, for example, servo booster pumps and include a storage portion 52a, 52b and an actuator 53a, 53b, respectively. The storage portions 52a, 52b each contain a coating to be discharged. The actuators 53a, 53b each apply pressure to the coating contained in the storage portions 52a, 52b via operation of pistons and deliver the coating to the discharge unit 41.

The liquid feeding pipe 54 guides the coating from the pumps 51a, 51b to the discharge unit 41. The upstream end portion of the liquid feeding pipe 54 is connected to both the pump 51a and the pump 51b, and the downstream end portion of the liquid feeding pipe 54 is connected to the discharge unit 41. In other words, the pumps 51a, 51b both supply the coating to the discharge unit 41 via the liquid feeding pipe 54. The liquid feeding pipe 54 includes a delivery pipe 55 and branch pipes 56a, 56b. The delivery pipe 55 is connected to the discharge unit 41, and the branch pipes 56a, 56b branch off from the delivery pipe 55 and are connected to the pumps 51a, 51b, respectively.

The delivery valve 67a opens and closes the path between the pump 51a and the discharge unit 41. The delivery valve 67a is provided in the branch pipe 56a. The delivery valve 67b opens and closes the path between the pump 51b and the discharge unit 41. The delivery valves 67a, 67b are air operated valves, for example, and air tubes for feeding air for the open/close operation are connected to the delivery valves 67a, 67b, respectively. The delivery valves 67a, 67b may each have a function that outputs a signal indicating its open/closed state.

The supply unit 49 supplies the coating to the pressure feeding unit 46. In other words, the pumps 51a, 51b of the pressure feeding unit 46 deliver the coating supplied (suctioned) from the supply unit 49 to the discharge unit 41. The supply unit 49 includes a liquid source 57, a supply pipe 58, suction valves 68a, 68b, a return pipe 59, and a circulation valve 69.

The liquid source 57 is the supply source of the coating. The supply pipe 58 connects the liquid source 57 and both the pumps 51a, 51b. Specifically, the supply pipe 58 includes a delivery pipe with one end connected to the liquid source 57 and two branch pipes that branch from the other end of the delivery pipe and respectively connect to the pumps 51a, 51b. The suction valve 68a opens and closes the path between the liquid source 57 and the pump 51a. The suction valve 68b opens and closes the path between the liquid source 57 and the pump 51b. The suction valves 68a, 68b are air operated valves, for example, and air tubes for feeding air for the open/close operation are connected to the suction valves 68a, 68b, respectively. The suction valves 68a, 68b may each have a function that outputs a signal indicating its open/closed state.

The return pipe 59 connects the delivery pipe 55 of the liquid feeding pipe 54 and the liquid source 57. Accordingly, the coating fed from the pumps 51a, 51b can be circulated back to the liquid source 57 without being sent to the discharge unit 41. The circulation valve 69 is provided in the return pipe 59 and switches a state of the flow path in the return pipe 59 from a closed state to an open state when the coating is circulated back. The circulation valve 69 is an air operated valve, for example.

The pressure sensors 61, 62a, 62b each measure the pressure of the coating in the application device 40 (hereinafter, simply referred to as "pressure in the application device 40") as a state of the application device 40. The pressure sensors 61, 62a, 62b measure the pressure at a plurality of sections in the application device 40. The plurality of sections include at least two sections different in terms of position in the direction aligned with the liquid feeding pipe 54 (the branch pipe 56a and the delivery pipe 55). Note that the direction aligned with the liquid feeding pipe 54 corresponds to the direction in which the liquid feeding pipe 54 extends and corresponds to the direction in which the coating flows in the liquid feeding pipe 54.

For example, the pressure sensor 61 is provided at a position near the discharge unit 41 in the liquid feeding pipe 54 (the delivery pipe 55). The pressure sensor 62a is provided, for example, at a position near the pump 51a (between the pump 51a and the delivery valve 67a) in the liquid feeding pipe 54. The pressure sensor 62b is provided, for example, at a position near the pump 51b (between the pump 51b and the delivery valve 67b) in the liquid feeding pipe 54. Hereinafter, the pressure of the coating measured by the pressure sensor 61 is referred to as the "gun side pressure", and the pressure of the coating measured by the pressure sensor 62a (the pressure sensor 62b) is referred to as the "pump side pressure".

The temperature sensors 64, 65 each measure the temperature of the coating in the application device 40 (hereinafter, simply referred to as "temperature in the application device 40") as a state of the application device 40. The temperature sensors 64, 65 measure the temperature at a plurality of sections in the application device 40. The plurality of sections include at least two sections different in terms of position in the direction aligned with the liquid feeding pipe 54. For example, the temperature sensor 64 is provided at a position near the discharge unit 41 in the liquid feeding pipe 54 (the delivery pipe 55). The temperature sensor 65 is provided at a position closer to the pumps 51a, 51b than the discharge unit 41 in the liquid feeding pipe 54. Hereinafter, the temperature of the coating measured by the temperature sensor 64 is referred to as the "gun side temperature", and the temperature of the coating measured by the temperature sensor 65 is referred to as the "pump side temperature".

### Control System

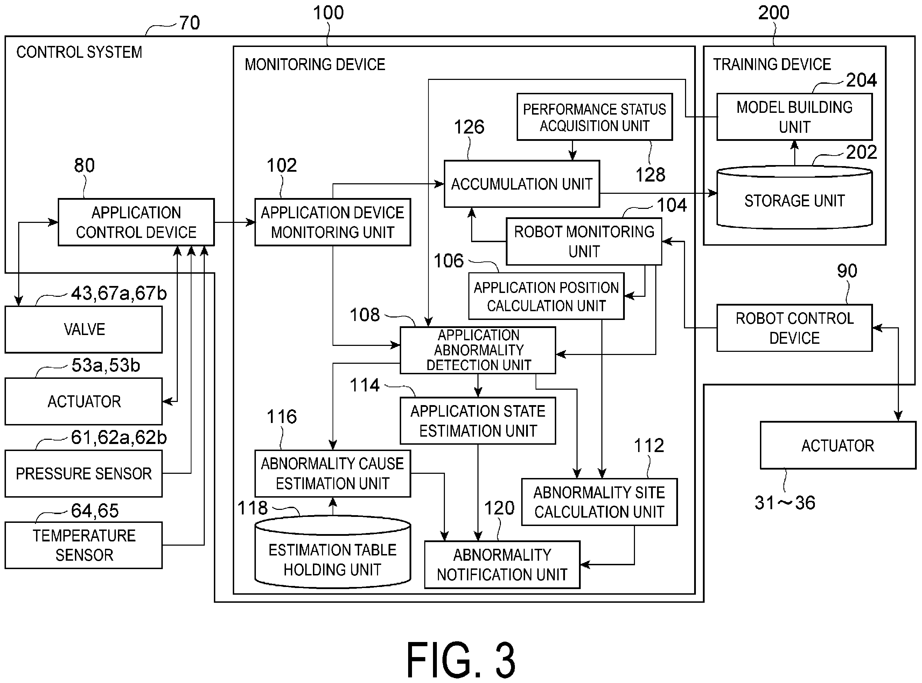

The control system 70 controls the articulated robot 10 and the application device 40 and monitors the quality of the coating on the workpiece W on the basis of at least one of the state of the articulated robot 10 or the state of the application device 40. As illustrated in FIG. 3, the control system 70 includes an application control device 80, a robot control device 90, and a monitoring device 100. The application control device 80 and the robot control device 90 are each, for example, a controller that is disposed at a position close to the articulated robot 10 and the application device 40 (i.e., an edge). The monitoring device 100 may be disposed at the edge or may be disposed at a position far from the articulated robot 10 and the application device 40 via a network line (i.e., a cloud).

The application control device 80 (discharge control unit) is a device configured to control the application device 40. The application control device 80 controls the application device 40 such that the coating is discharged from the discharge unit 41. Specifically, the application control device 80 maintains the state in the application device 40 during the discharge of coating from the discharge unit 41 in line with a predetermined target value. Specific examples of information indicating the state in the application device 40 include pressure obtained by the pressure sensors 61, 62a, 62b, the temperature obtained by the temperature sensors 64, 65, and the drive state of the actuators 53a, 53b. Specific examples of the drive state of the actuators 53a, 53b include the rotational position, the rotational speed, and the torque value (driving force) of the motor.

The application control device 80 controls the discharge valve 43, the delivery valves 67a, 67b, the suction valves 68a, 68b, and the circulation valve 69 to switch the discharge state of the coating from the discharge unit 41. Examples of the discharge state of the coating include a state in which the coating is being discharged, a state of preparing to discharge the coating, and a state in which the coating is being circulated. As an example, in the discharge state of the coating, the application control device 80 switches the discharge valve 43 and one of the delivery valves 67a, 67b to an open state, feeds the coating toward the discharge unit 41 from one of the pumps 51a, 51b corresponding to the delivery valve that was switched to the open state, and discharges the coating from the discharge unit 41. In parallel with discharging the coating, the application control device 80 may switch one of the suction valves 68a, 68b corresponding to the other of the pumps 51a, 51b (pump on standby) to the open state and supply the coating from the supply unit 49 to the other pump 51a, 51b.

The application control device 80 may adjust the state of the coating discharged from the discharge unit 41 on the basis of the pressure in the application device 40 during discharge of the coating. For example, the application control device 80 may control the actuator 53a (actuator 53b) such that the pressure value follows a target value in accordance with the measurement value from either the pressure sensor 61 or the pressure sensor 62a (pressure sensor 62b). Alternatively, the application control device 80 may control the actuator 53a (actuator 53b) such that the piston of the pump 51a (pump 51b) moves at a substantially constant speed in order to maintain the flow rate of the coating being discharged at a substantially constant rate.

The application control device 80 may control the actuator of the pump on standby such that the pressure in the pump on standby of the pumps 51a, 51b (measurement value of the sensor of the pressure sensors 62a, 62b corresponding to the pump) follows the pressure of the coating from the other pump feeding the coating (measurement value from the other sensor of the pressure sensors 62a, 62b). The application control device 80 may control the delivery valves 67a, 67b to switch the pump that feeds the coating to the discharge unit 41 (such that the pump on standby feeds the coating) when the amount of coating remaining in the pump during discharge is reduced to below a predetermined amount.

The robot control device 90 (robot control unit) is a device configured to control the articulated robot 10. The robot control device 90 controls the articulated robot 10 such that the coating discharged by the application device 40 is applied to the workpiece W.

Specifically, the robot control device 90 causes the articulated robot 10 to change the position and the orientation of the discharge unit 41 such that the coating discharged by the discharge unit 41 is applied to the workpiece W. The robot control device 90, for example, changes the position and the orientation of the discharge unit 41 such that the position where the coating discharged by the discharge unit 41 adheres to the workpiece W moves along a predetermined path. More specifically, the robot control device 90 calculates, using inverse kinematics, target angles for the actuators 31 to 36 on the basis of the target position and the target orientation of the discharge unit 41, and controls the actuators 31 to 36 so as to follow the target angles. The robot control device 90 may acquire information indicating the drive state of each of the actuators 31 to 36 in order to adjust the position and the orientation of the discharge unit 41 to the target position and the target orientation. Examples of the information indicating the drive state of the actuators 31 to 36 include the rotational position and the rotational speed of the motor.

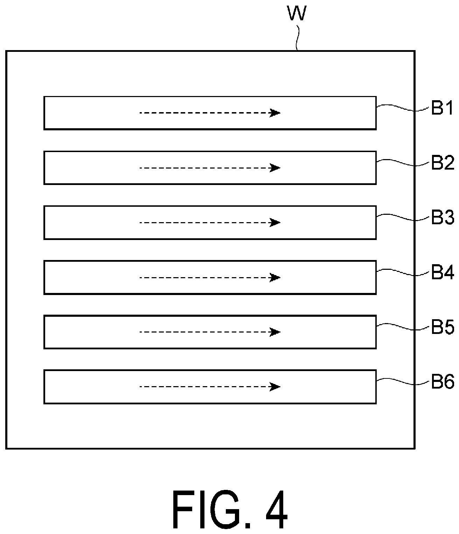

For example, as illustrated in FIG. 4, a plurality of application paths indicating the path of the coating adhesion position are defined on the workpiece W. The application control device 80 controls the application device 40 such that the coating is discharged from the discharge unit 41 while the position and the orientation of the discharge unit 41 is made to follow the target position and the target orientation according to each application path by the robot control device 90. In this manner, a plurality of beads B1 to B6 are formed on the workpiece W along the plurality of application paths. For example, the application control device 80 and the robot control device 90 respectively control the application device 40 and the articulated robot 10 such that the width in a direction orthogonal to the application path is substantially constant for each of the plurality of beads B1 to B6. For example, the application control device 80 controls at least one of the pumps 51a, 51b such that the coating is discharged at a substantially constant flow rate, and the robot control device 90 controls the actuators 31 to 36 such that the movement speed of the discharge unit 41 relative to the workpiece W is substantially constant.

### Monitoring Device

Returning to FIG. 3, the monitoring device 100 monitors the quality of the application state of the coating applied on the workpiece W (hereinafter, simply referred to as "application state of the coating") on the basis of at least one of the state of the articulated robot 10 or the state of the application device 40. Examples of the quality of the application state of the coating include the width and thickness of the line (bead) formed by the coating on the workpiece W. An example of monitoring the quality described above includes the monitoring device 100 detecting whether an abnormality has occurred in the application state of the coating.

As functional configurations (hereinafter, referred to as "functional modules") of the monitoring device 100, the monitoring device 100 includes an application device monitoring unit 102 (device state acquisition unit), a robot monitoring unit 104 (robot state acquisition unit), an application position calculation unit 106, an application abnormality detection unit 108, an abnormality site calculation unit 112, an application state estimation unit 114, an abnormality cause estimation unit 116, an estimation table holding unit 118, and an abnormality notification unit 120.

The application device monitoring unit 102 acquires information indicating the state of the application device 40 (hereinafter, referred to as "state information of the application device 40"). The application device monitoring unit 102 acquires the state information of the application device 40 from the application control device 80 for a predetermined interval, for example. The state information of the application device 40 acquired by the application device monitoring unit 102 includes a state of the application device 40 that affects the quality of the application state of the coating. The application device monitoring unit 102 acquires, for example, information indicating the pressure in the application device 40, information indicating the temperature in the application device 40, information indicating the drive state of each of the pumps 51a and 51b, and information indicating the open/closed state of the valve.

For example, the application device monitoring unit 102 acquires, as the information indicating the pressure in the application device 40, the gun side pressure (measurement value from the pressure sensor 61), the pump 51a side pressure (measurement value from the pressure sensor 62a), and the pump 51b side pressure (measurement value from the pressure sensor 62b). The application device monitoring unit 102 may acquire, as the information indicating the temperature in the application device 40, the gun side temperature (measurement value from the temperature sensor 64) and the pump side temperature (measurement value from the temperature sensor 65). The application device monitoring unit 102 may acquire, as the information indicating the drive state of each of the pumps 51a, 51b, information indicating the torque value (driving force) or rotational speed of each of the actuators 53a, 53b.

The robot monitoring unit 104 acquires information indicating the state of the articulated robot 10 (hereinafter, referred to as "state information of the articulated robot 10"). The robot monitoring unit 104 acquires the state information of the articulated robot 10 for the predetermined interval, for example. The state information of the articulated robot 10 acquired by the robot monitoring unit 104 includes the state of the articulated robot 10 that affects the quality of the application state of the coating. The robot monitoring unit 104 acquires information indicating the state of the articulated robot 10 that affects the quality of the application state of the coating on the basis of the information indicating the drive state of the actuators 31 to 36 obtained from the robot control device 90, for example.

An example of the state of the articulated robot 10 that affects the quality of the application state of the coating is the operating speed of the articulated robot 10 with respect to the workpiece W (movement speed of the discharge unit 41). The operating speed of the articulated robot 10 is the speed at which the discharge unit 41 moves along the application path during the discharge of the coating toward the workpiece W. Note that the movement speed of the discharge unit 41 is determined by the operation of the articulated robot 10 and thus indicates the state of the articulated robot 10. The robot monitoring unit 104 may calculate the movement speed of the discharge unit 41 (the operating speed of the articulated robot 10) on the basis of the drive state of the actuators 31 to 36. The robot monitoring unit 104 may calculate the acceleration of the movement of the discharge unit 41 (acceleration of the articulated robot 10) on the basis of the drive state of the actuators 31 to 36 as the information relating to the state (operation) of the articulated robot 10.

An example of the state of the articulated robot 10 that affects the quality of the application state of the coating is the position and the orientation of the discharge unit 41 with respect to the workpiece W. Note that the position and the orientation of the discharge unit 41 is determined by the operation of the articulated robot 10 and thus indicates the state of the articulated robot 10. The robot monitoring unit 104 may, for example, calculate the position and the orientation of the discharge unit 41 in the interval by performing a forward kinematics calculation on the basis of the drive state of the actuators 31 to 36, for example. Note that the robot monitoring unit 104 may acquire the state information of the articulated robot 10 on the basis of information from an external sensor, such as a vision sensor.

The application position calculation unit 106 calculates the application position of the coating applied, on the workpiece W, from the discharge unit 41 on the basis of the state of the articulated robot 10 obtained from the robot monitoring unit 104. The application position of the coating is a position where the coating discharged from the discharge unit 41 adheres to the surface of the workpiece W and may be represented by a coordinate system based on the workpiece W. The application position calculation unit 106 calculates, in accordance with the information indicating the position and the orientation of the discharge unit 41 for each predetermined interval, the application position of the coating applied to the workpiece W in the interval, for example. Depending on the relative position and orientation of the discharge unit 41 (the orientation of the outlet) with respect to the workpiece W in one interval, the application position on the workpiece W in the interval is determined. For example, the application position calculation unit 106 determines the point of intersection between the workpiece W and an imaginary line extending in the discharge direction of the coating from the outlet, and calculates the point of intersection as the application position on the workpiece W.

The application abnormality detection unit 108 detects an abnormality in the application state of the coating on the workpiece W (hereinafter, simply referred to as "detects an abnormality") on the basis of at least one of the state of the application device 40 or the state of the articulated robot 10. The application abnormality detection unit 108 detects an abnormality for the predetermined interval, for example. In the present specification, detecting an abnormality in the application state of the coating may mean detecting the execution of an application (discharge) under conditions where an abnormality could occur, and does not necessarily mean detecting that an abnormality has occurred.

The application abnormality detection unit 108 detects an abnormality on the basis of either the state information of the application device 40 obtained from the application device monitoring unit 102 or the state information of the articulated robot 10 obtained from the robot monitoring unit 104, for example. To more reliably detect an abnormality, the application abnormality detection unit 108 may detect an abnormality on the basis of the state information of the application device 40 and the state information of the articulated robot 10. When detecting an abnormality, the application abnormality detection unit 108 may use two or more types of state information of the application device 40, or may use two or more types of state information of articulated robot 10. In a case where any two or more types of state information is used, the application abnormality detection unit 108 may determine that an abnormality has occurred in the application state of the coating when an abnormality is detected on the basis of any one of the pieces of two or more types of state information. Next, a specific example of a method for detecting an abnormality using various types of state information is given.

The application abnormality detection unit 108 may detect an abnormality on the basis of the pressure in the application device 40. The application abnormality detection unit 108 detects an abnormality on the basis of, for example, at least one of the gun side pressure or the pump side pressure. For example, the application abnormality detection unit 108 determines whether the gun side pressure (pump side pressure) is within a predetermined reference range, and detects an abnormality when the pressure value is outside of the reference range.

The application abnormality detection unit 108 may detect an abnormality on the basis of the temperature of the coating in the application device 40. The application abnormality detection unit 108 detects an abnormality on the basis of, for example, at least one of the gun side temperature or the pump side temperature. For example, the application abnormality detection unit 108 determines whether the gun side temperature (pump side temperature) is within a predetermined reference range, and detects an abnormality when the temperature is outside of the reference range.

The application abnormality detection unit 108 may detect an abnormality on the basis of the drive information of each of the pumps 51a, 51b. The application abnormality detection unit 108 detects an abnormality on the basis of the torque value of each of the actuators 53a, 53b, for example. For example, the application abnormality detection unit 108 determines whether the torque value of each of the actuator 53a, 53b is within a predetermined reference range, and detects an abnormality when the torque value is outside of the reference range.

The application abnormality detection unit 108 may detect an abnormality by comparing a signal indicating an open/close command for any valve from among the discharge valve 43, the delivery valves 67a, 67b, and the suction valves 68a, 68b and a signal indicating the open/closed state of that valve. For example, in a case where a command signal instructing that the discharge valve 43 be switched to the open state is output at the start of discharging the coating, the application abnormality detection unit 108 detects an abnormality when a signal from the discharge valve 43 indicates the closed state.

The application abnormality detection unit 108 may detect an abnormality on the basis of a measurement value from the pressure sensors 62a, 62b just before switching when the pump feeding the coating to the discharge unit 41 is switched to one of the pumps 51a, 51b during discharge for forming one bead. For example, when the pump is switched from the pump 51a to the pump 51b, the application abnormality detection unit 108 may detect an abnormality just before switching when the difference between the pressure in the pump 51b (the measurement value from the pressure sensor 62b) and the pressure of the coating from the pump 51a (the measurement value from the pressure sensor 62a) is equal to or greater than a predetermined value.

The application abnormality detection unit 108 may detect an abnormality in the application state on the basis of the operating speed of the articulated robot 10. For example, the application abnormality detection unit 108 determines whether the operating speed of the articulated robot 10 (movement speed of the discharge unit 41) is within a predetermined reference range, and detects an abnormality when the operating speed is outside of the reference range. Alternatively, the application abnormality detection unit 108 may determine whether the acceleration of the articulated robot 10 (movement acceleration of the discharge unit 41) is within a reference range, and may detect an abnormality when the acceleration is outside of the reference range. In other words, detection of an abnormality on the basis of the acceleration of the articulated robot 10 is included in the meaning of detecting an abnormality on the basis of the operating speed of the articulated robot 10.

The application abnormality detection unit 108 may detect an abnormality on the basis of the relative position and orientation of the discharge unit 41 with respect to the workpiece W. The application abnormality detection unit 108 determines whether the position and the orientation of the discharge unit 41 are within a reference range, and detects an abnormality when the position and the orientation are outside of the reference range. For example, the reference range for the position and the orientation of the discharge unit 41 is calculated by adding and subtracting a predetermined error tolerance to and from the target position and the target orientation according to the application path.

The application abnormality detection unit 108 may cause a device (hereinafter, referred to as "external device") different from the monitoring device 100 (control system 70) to determine whether the values indicated by the various types of information states are within the respective reference ranges, and may detect an abnormality on the basis of the determination result. For example, the application abnormality detection unit 108 may output information indicating the pressure in the application device 40 to the external device and cause the external device to determine whether the pressure value is within the reference range. Then, the application abnormality detection unit 108 may acquire information indicating the determination result by the external device and determine (detect an abnormality) that there is a possibility that there is an abnormality in the application state of the coating in a case where the information indicates that the application state is abnormal.

The abnormality site calculation unit 112 calculates the site of the abnormality in the application state on the workpiece W on the basis of the detection result of the abnormality in the application state of the coating and the calculation result of the application position obtained by the application position calculation unit 106. The abnormality site calculation unit 112, for example, calculates the site of the abnormality in accordance with the calculation result of the application position obtained in a case where an abnormality is detected (in an interval in which an abnormality is detected) in the application state by the application abnormality detection unit 108. In the present specification, the site of the abnormality is a site (portion) of the coating applied to the workpiece W where there is a likelihood that an abnormality has occurred.

As the site of the abnormality, the abnormality site calculation unit 112 may calculate a position (coordinate position) determined by the coordinate system based on the workpiece W or may calculate one section of the plurality of application paths. For example, the abnormality site calculation unit 112 may use a coordinate position indicated by the calculation result of the application position obtained from the application position calculation unit 106 as the site of the abnormality. Alternatively, the abnormality site calculation unit 112 may use an application path (section) including a coordinate position indicated by the calculation result of the application position obtained from the application position calculation unit 106 as the site of the abnormality.

The application state estimation unit 114 estimates the application state of the coating applied to the workpiece W on the basis of the state of the application device 40 and the state of the articulated robot 10. Specifically, when an abnormality in the application state is detected by the application abnormality detection unit 108, the application state estimation unit 114 estimates what kind of abnormality there is regarding the application state of the coating (details of the abnormality in the application state). Examples of the application state of the coating to be estimated include a bead width, a bead thickness (film thickness), whether the coating is applied, and an erroneous application position. The application state estimation unit 114 may estimate the application state of the coating applied to the workpiece W on the basis of the pressure of the application device 40 and the operating speed of the articulated robot 10 in a case where (in an interval in which) an abnormality is detected.

For example, in a case where the operating speed (acceleration) of the articulated robot 10 is within the reference range and one of the gun side pressure or the pump side pressure is greater than an upper limit value of the reference range, the application state estimation unit 114 estimates that the bead width is greater than a predetermined set width. In a case where the operating speed (acceleration) of the articulated robot 10 is within the reference range and one of the gun side pressure or the pump side pressure is less than a lower limit value of the reference range, the application state estimation unit 114 may estimate that the bead width is less than the set width.

In a case where, for example, the gun side pressure and the pump side pressure are within the reference range and the operating speed of the articulated robot 10 is greater than an upper limit value of the reference range, the application state estimation unit 114 estimates that the bead thickness is less than a predetermined set thickness (that there is insufficient coating). In a case where the gun side pressure and the pump side pressure are within the reference range and the operating speed of the articulated robot 10 is lower than a lower limit value of the reference range, the application state estimation unit 114 may estimate that the bead thickness is greater than the set thickness (that there is excessive coating).

The application state estimation unit 114 may estimate the application state (shape) of the bead on the basis of a change in the state of the application device 40 and a change in the state of the articulated robot 10 obtained not only in an interval in which the abnormality was detected but also in a time period (hereinafter, referred to as "estimation period") including before and after the interval in which an abnormality was detected.

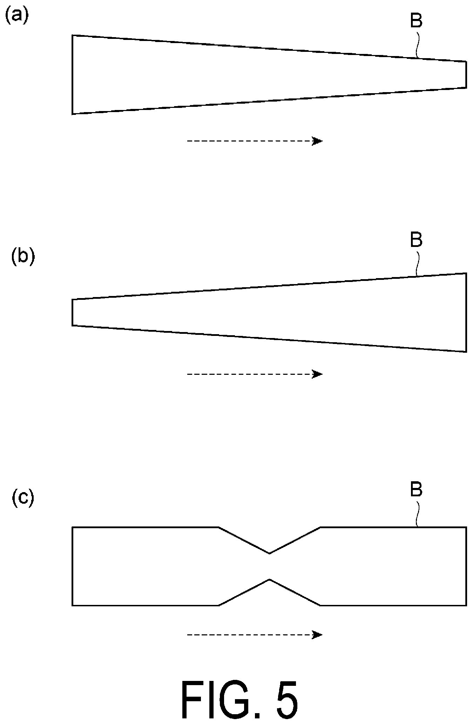

For example, in a case where, when the estimation period coincides with the discharge of the coating, the operating speed of the articulated robot 10 is maintained within the reference range and one of the gun side pressure or the pump side pressure gradually approaches the reference range from a state of exceeding the upper limit value of the reference range, the application state estimation unit 114 may estimate that the application state of the bead B corresponds to being wide at the start. As illustrated in FIG. 5(a), being wide at the start is a state in which the width of the bead B gradually decreases along the application direction indicated by the dashed line. In a case where, when the estimation period coincides with the preparation for discharging the coating, one of the gun side pressure or the pump side pressure is greater than the upper limit value of the reference range, the application state estimation unit 114 may estimate that the application state of the bead corresponds to being wide at the start.

In a case where, when the estimation period coincides with the discharge of the coating, the operating speed of the articulated robot 10 is maintained within the reference range and one of the gun side pressure or the pump side pressure is gradually approaching the reference range from a state of being less than the lower limit value of the reference range, the application state estimation unit 114 may estimate that the application state of the bead B corresponds to being narrow at the start. As illustrated in FIG. 5(b), being narrow at the start is a state in which the width of the bead B gradually increases along the application direction indicated by the dashed line. In a case where, when the estimation period coincides with the preparation for discharging the coating, one of the gun side pressure or the pump side pressure is less than the lower limit value of the reference range, the application state estimation unit 114 may estimate that the application state of the bead corresponds to being narrow at the start.

In a case where, when the estimation period coincides with the discharge of the coating, one of the gun side pressure or the pump side pressure is greater than the upper limit value of the reference range partway through discharge, the application state estimation unit 114 may estimate that the application state of the bead corresponds to being wide in the middle (a state in which the width of the bead is greater at a portion partway along the bead than other portions). In a case where one of the gun side pressure or the pump side pressure is less than the lower limit value of the reference range partway through discharge, the application state estimation unit 114 may estimate that the application state of the bead corresponds to being narrow in the middle. As illustrated in FIG. 5(c), being narrow in the middle is a state in which the width of the bead B is less at a portion partway along the bead B than other portions.

The abnormality cause estimation unit 116 estimates the cause of the abnormality in the application state of the coating (hereinafter, simply referred to as "cause of the abnormality") on the basis of at least one of the state of the application device 40 or the state of the articulated robot 10. The abnormality cause estimation unit 116 may estimate whether the cause of the abnormality is in the application device 40 or the articulated robot 10 on the basis of the state of the application device 40 and the state of the articulated robot 10.

In a case where it is determined that the cause of the abnormality is in the application device 40, the abnormality cause estimation unit 116 may estimate the section where the cause of the abnormality occurred in the application device 40 on the basis of states at a plurality of sections in the application device 40. The abnormality cause estimation unit 116 estimates, for example, the section where the cause of the abnormality occurred in the application device 40 on the basis of the pressure at a plurality of sections located at different positions in a direction aligned with the liquid feeding pipe 54 in the application device 40. Alternatively, the abnormality cause estimation unit 116 may estimate the section where the cause of the abnormality occurred on the basis of the pressure at a plurality of sections in the application device 40 and the drive information of the pump 51a (pump 51b).

Examples of the cause of the abnormality estimated by the abnormality cause estimation unit 116 include, for example, a leakage of coating from a line in the application device 40, a blockage caused by coating in a line, malfunction of the pumps 51a, 51b, and an abnormality in the supply unit 49. Next, a specific example of a method for estimating the abnormality cause executed using various information is given.

In a case where, for example, an abnormality is detected by the application abnormality detection unit 108 with the cause being in the state of the application device 40, the abnormality cause estimation unit 116 determines the cause of the abnormality to be in the application device 40. In a case where one of the gun side pressure or the pump side pressure is less than the lower limit value of the reference range, the abnormality cause estimation unit 116 estimates that the cause of the abnormality is in the application device 40 and not in the articulated robot 10. In this case, the abnormality cause estimation unit 116 may estimate that the cause of the abnormality is a leakage of coating in one of the lines in the application device 40. Note that in a case where the abnormality cause estimation unit 116 cannot narrow down the expected causes to a single cause, the abnormality cause estimation unit 116 may estimate a plurality of causes of the abnormality.

In a similar manner, in a case where an abnormality is detected by the application abnormality detection unit 108 with the cause being in the state of the articulated robot 10, the abnormality cause estimation unit 116 estimates the cause of the abnormality to be in the articulated robot 10. In a case where the operating speed of the articulated robot 10 is outside of the reference range, the abnormality cause estimation unit 116 estimates that the cause of the abnormality is in the articulated robot 10. In this case, the abnormality cause estimation unit 116 may estimate that the cause of the abnormality is malfunction of the actuators 31 to 36.

In a case where the coating is fed from the pump 51a to the discharge unit 41, the abnormality cause estimation unit 116 may estimate the section where the cause of the abnormality occurred in the application device 40 on the basis of the gun side pressure (measurement value from the pressure sensor 61) and the pump side pressure (measurement value from the pressure sensor 62a). For example, in a case where the pump side pressure exceeds the upper limit value of the reference range and the gun side pressure is less than the lower limit value of the reference range (a case where the pressure loss in the liquid feeding pipe 54 is greater than a predetermined value), the abnormality cause estimation unit 116 estimates that the cause of the abnormality is between the pressure sensor 62a and the pressure sensor 61. In this case, the abnormality cause estimation unit 116 may estimate that there is a blockage caused by the coating or a twist (kink) in the line between the pressure sensor 62a and the pressure sensor 61.

In a case where the coating is fed from the pump 51a to the discharge unit 41, the abnormality cause estimation unit 116 may estimate the section where the cause of the abnormality occurred on the basis of the gun side pressure, the pump side pressure, and the torque value of the actuator 53a. When the gun side pressure and the pump side pressure are within the reference range (are functioning normally) and the torque value of the pump 51a is outside of the reference range (are functioning abnormally), for example, the abnormality cause estimation unit 116 may estimate that the cause of the abnormality is the pump 51a malfunctioning.

The abnormality cause estimation unit 116 may reference a table for estimation held in the estimation table holding unit 118 to estimate the cause of the abnormality and the section where the cause of the abnormality occurred in the application device 40. The estimation table holding unit 118 may hold a table in which the discharge state of the coating from the discharge unit 41 and whether there is an abnormality in states at a plurality of sections (for example, the gun side pressure, the pump side pressure, and the torque value of the pump) in the application device 40, and the details of such abnormalities, are associated with sections where the causes of abnormalities occurred. Examples of the details of the abnormalities include being in a state in which the pressure or the torque value is greater than the upper limit of the reference range, and being in a state in which the pressure or the torque value is less than the lower limit of the reference range.

The abnormality notification unit 120 sends a notification of the site of the abnormality in the application state of the coating on the workpiece W on the basis of the information indicating the site of the abnormality obtained from the abnormality site calculation unit 112. In other words, the abnormality notification unit 120 sends a notification of the site of the abnormality in the application state of the coating on the basis of the detection result of the abnormality in the application state of the coating obtained by the application abnormality detection unit 108 and the calculation result of the application position obtained by the application position calculation unit 106. The monitoring device 100 may include a display, and the abnormality notification unit 120 may output information indicating the site of the abnormality to the display. The abnormality notification unit 120 notifies a worker or operator of the site of the abnormality via the display displaying the site of the abnormality.

In addition to the site of the abnormality, the abnormality notification unit 120 may send a notification of the estimation result of the application state of the coating obtained from the application state estimation unit 114. This estimation result indicates the application state of the coating on the workpiece W in a case where (in an interval in which) the abnormality in the application state of the coating is detected, and thus indicates the state of the coating at the site of the abnormality. In other words, in addition to the site of the abnormality, the abnormality notification unit 120 may send a notification of the state of the coating at the site of the abnormality on the workpiece W on the basis of the detection result of the abnormality in the application state of the coating and the estimation result of the application state of the coating. In a case where the site of the abnormality coincides with any one of the application paths, the abnormality notification unit 120 may send a notification of the estimation result of the state (shape) of the bead as the state of the coating on the application path.

In addition to the site of the abnormality described above, the abnormality notification unit 120 may send a notification of the cause of the abnormality obtained by the abnormality cause estimation unit 116. In addition to the cause of the abnormality, the abnormality notification unit 120 may send a notification of whether the cause of the abnormality is in the application device 40 or the articulated robot 10 on the basis of the information relating to the cause of the abnormality obtained from the abnormality cause estimation unit 116. Alternatively, in addition to the cause of the abnormality, the abnormality notification unit 120 may send a notification of the section where the cause of the abnormality occurred on the basis of the information relating to the cause of the abnormality obtained from the abnormality cause estimation unit 116.

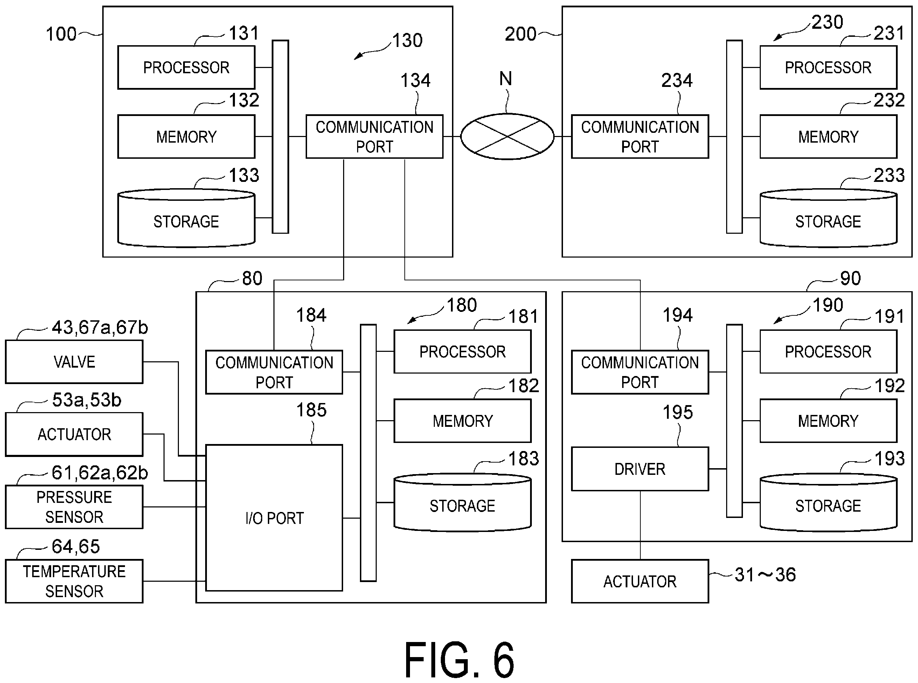

As illustrated in FIG. 6, the application control device 80 includes a circuit 180. The circuit 180 includes at least one processor 181, a memory 182, a storage 183, and a communication port 184. The storage 183 is a non-volatile storage medium (for example, a flash memory) that is readable by a computer. The storage 183 stores programs and data for executing control of the application device 40 such that the coating is discharged from the discharge unit 41.

The memory 182 temporarily stores programs loaded from the storage 183 and calculation results and the like obtained by the processor 181. The processor 181 implements each functional module of the application control device 80 by executing the programs described above in cooperation with the memory 182. At an I/O port 185, electrical signals are transferred between the discharge valve 43, the delivery valves 67a, 67b, the actuators 53a, 53b, the pressure sensors 61, 62a, 62b, the temperature sensors 64, 65, and the like, according to commands from the processor 181. The communication port 184 communicates with the monitoring device 100 wirelessly or via a wire or a network line according to commands from the processor 191.

The robot control device 90 includes a circuit 190. The circuit 190 includes at least one processor 191, a memory 192, a storage 193, a communication port 194, and a driver 195. The storage 193 is a non-volatile storage medium (for example, a flash memory) that is readable by a computer. The storage 193 stores programs and data for causing the articulated robot 10 to change the position and the orientation of the discharge unit 41 such that the coating discharged by the discharge unit 41 is applied to the workpiece W.

The memory 192 temporarily stores programs loaded from the storage 193 and calculation results and the like obtained by the processor 191. The processor 191 implements each functional module of the robot control device 90 by executing the programs described above in cooperation with the memory 192. The driver 195 outputs drive power to the actuators 31 to 36 in accordance with commands from the processor 191. The communication port 194 communicates with the monitoring device 100 wirelessly or via a wire or a network line according to commands from the processor 191.

The monitoring device 100 includes a circuit 130. The circuit 130 includes at least one processor 131, a memory 132, a storage 133, and a communication port 134. The storage 133 is a non-volatile storage medium (for example, a flash memory) that is readable by a computer.

The storage 133 stores programs and data for causing the monitoring device 100 to execute a monitoring method including acquiring a state of the application device 40 including the discharge unit 41 configured to discharge the coating, acquiring a state of the articulated robot 10 configured to change the position and the orientation of the discharge unit 41 such that the coating discharged by the discharge unit 41 is applied to the workpiece W, detecting an abnormality in the application state of the coating on the basis of at least one of the state of the application device 40 or the state of the articulated robot 10, calculating the application position of the coating, on the workpiece W, applied from the discharge unit 41 on the basis of the state of the articulated robot 10, and sending a notification of the site of the abnormality in the application state on the workpiece W on the basis of the detection result of the abnormality in the application state and the calculation result of the application position. The storage 133 includes a storage area for configuring each functional module described above and a storage area allocated to the estimation table holding unit 118.

The memory 132 temporarily stores programs loaded from the storage 133 and calculation results and the like obtained by the processor 131. The processor 131 implements each functional module of the monitoring device 100 by executing the programs described above in cooperation with the memory 132. The communication port 134 communicates with the application control device 80 and the robot control device 90 according to commands from the processor 131.

### Monitoring Process

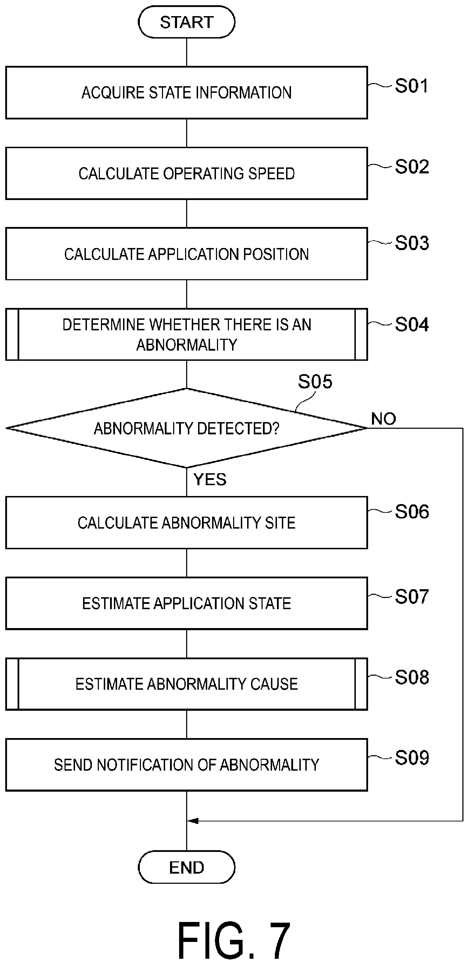

Next, as an example of the monitoring method, an example of a monitoring process executed by the monitoring device 100 will be described. FIG. 7 is a flowchart illustrating an example of a monitoring process. As illustrated in FIG. 7, the monitoring device 100 first executes step S01. In step S01, for example, the application device monitoring unit 102 acquires the state information of the application device 40, and the robot monitoring unit 104 acquires the state information of the articulated robot 10. For example, the application device monitoring unit 102 acquires the gun side pressure, the pump side pressure, and the torque value of one of the pumps 51a, 51b from the application control device 80. The robot monitoring unit 104 may calculate (acquire) the position and the orientation of the discharge unit 41 on the basis of the drive information of the actuators 31 to 36 obtained from the robot control device 90.

Subsequently, the monitoring device 100 executes step S02. In step S02, for example, the robot monitoring unit 104 calculates the operating speed of the articulated robot 10 on the basis of the drive information of the actuators 31 to 36 obtained from the robot control device 90. The robot monitoring unit 104 may calculate the operating speed of the articulated robot 10 on the basis of the drive state of each of the actuators 31 to 36.

Subsequently, the monitoring device 100 executes step S03. In step S03, for example, the application position calculation unit 106 calculates the application position. The application position calculation unit 106 calculates, for example, the application position of the coating applied to the workpiece W in accordance with the information indicating the position and the orientation of the discharge unit 41 obtained from the robot monitoring unit 104. For example, the application position calculation unit 106 determines the point of intersection between the workpiece W and an imaginary line extending in the discharge direction of the coating from the outlet, and calculates the point of intersection as the application position on the workpiece W.

Subsequently, the monitoring device 100 executes step S04. In step S04, for example, the application abnormality detection unit 108 determines whether there is an abnormality in the application state of the coating on the basis of the state information of the application device 40 obtained from the application device monitoring unit 102 and the state information of the articulated robot 10 obtained from the robot monitoring unit 104. A specific example of the process for determining whether there is an abnormality executed by the application abnormality detection unit 108 will be given below.

Subsequently, the monitoring device 100 executes step S05. In step S05, the monitoring device 100 determines whether the application abnormality detection unit 108 has detected an abnormality in the application state of the coating. In a case where it is determined that an abnormality in the application state of the coating has not been detected, the monitoring device 100 does not execute steps S06 to S09 described below.

In step S05, in a case where an abnormality has been detected in the application state of the coating, the monitoring device 100 executes step S06. In step S06, for example, the abnormality site calculation unit 112 calculates the site of the abnormality in the application state on the workpiece W on the basis of the detection result of the abnormality in the application state of the coating and the calculation result of the application position obtained by the application position calculation unit 106. For example, the abnormality site calculation unit 112 may use, as the site of the abnormality, a coordinate position indicated by the calculation result of the application position obtained from the application position calculation unit 106 when an abnormality in the application state is detected.

Subsequently, the monitoring device 100 executes step S07. In step S07, for example, the application state estimation unit 114 estimates the application state of the coating applied to the workpiece W on the basis of the state of the application device 40 and the state of the articulated robot 10. The application state estimation unit 114 may estimate the application state of the coating applied to the workpiece W on the basis of the pressure in the application device 40 and the operating speed of the articulated robot 10 when an abnormality is detected. For example, in a case where the operating speed (acceleration) of the articulated robot 10 is within the reference range and one of the gun side pressure or the pump side pressure is greater than an upper limit value of the reference range, the application state estimation unit 114 estimates that the bead width is greater than a predetermined set width. In a case where the operating speed (acceleration) of the articulated robot 10 is within the reference range and one of the gun side pressure or the pump side pressure is less than a lower limit value of the reference range, the application state estimation unit 114 may estimate that the bead width is less than the set width.

Subsequently, the monitoring device 100 executes step S08. In step S08, for example, the abnormality cause estimation unit 116 estimates the cause of the abnormality in the application state of the coating on the basis of at least one of the state of the application device 40 or the state of the articulated robot 10. The abnormality cause estimation unit 116 may estimate whether the cause of the abnormality is in the application device 40 or the articulated robot 10 on the basis of the state of the application device 40 and the state of the articulated robot 10.

In a case where it is determined that the cause of the abnormality is in the application device 40, the abnormality cause estimation unit 116 may estimate the section where the cause of the abnormality occurred in the application device 40 on the basis of states at a plurality of sections in the application device 40. The abnormality cause estimation unit 116 estimates, for example, the section where the cause of the abnormality occurred in the application device 40 on the basis of the pressure at a plurality of sections located at different positions in the direction aligned with the liquid feeding pipe 54 in the application device 40. Alternatively, the abnormality cause estimation unit 116 may estimate the section where the cause of the abnormality occurred on the basis of the pressure at a plurality of sections in the application device 40 and the drive information of the pump 51a (pump 51b). A specific example of the process for estimating the cause of the abnormality will be given below.

Subsequently, the monitoring device 100 executes step S09. In step S09, for example, the abnormality notification unit 120 sends a notification of the site of the abnormality in the application state of the coating on the workpiece W on the basis of the information indicating the site of the abnormality obtained from the abnormality site calculation unit 112. In addition to the site of the abnormality, the abnormality notification unit 120 may send a notification of the estimation result of the application state of the coating obtained from the application state estimation unit 114. In addition to the site of the abnormality, the abnormality notification unit 120 may send a notification of the cause of the abnormality obtained by the abnormality cause estimation unit 116. In addition to the cause of the abnormality, the abnormality notification unit 120 may send a notification of whether the cause of the abnormality is in the application device 40 or the articulated robot 10 on the basis of the information relating to the cause of the abnormality obtained from the abnormality cause estimation unit 116. Alternatively, in addition to the cause of the abnormality, the abnormality notification unit 120 may send a notification of the section where the cause of the abnormality occurred on the basis of the information relating to the cause of the abnormality obtained from the abnormality cause estimation unit 116.

The abnormality notification unit 120 may output information indicating the site of the abnormality, the estimation result of the application state of the application, and the estimation result of the cause of the abnormality on the display of the monitoring device 100. The abnormality notification unit 120 notifies the worker or operator of the site of the abnormality via the display displaying the site of the abnormality or similar information, for example. Then, the monitoring device 100 ends the series of monitoring processes.

### Process for Determining Whether there is an Abnormality

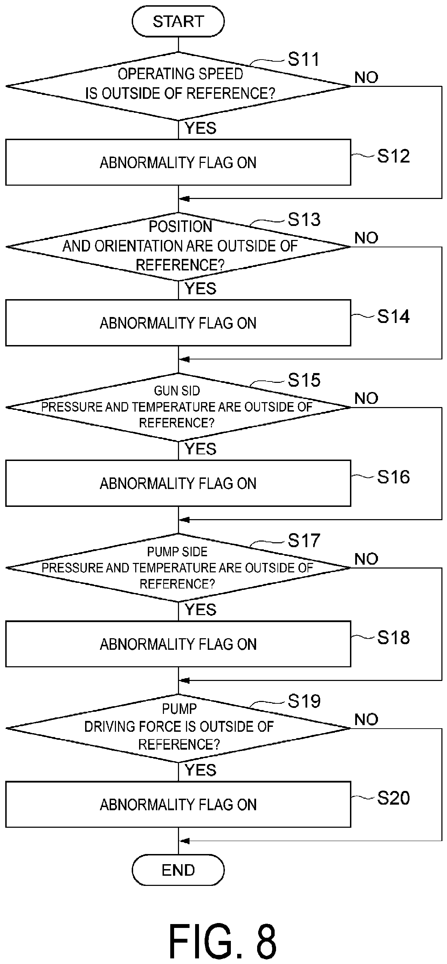

FIG. 8 is a flowchart illustrating an example of a process for determining whether there is an abnormality in step S04. In the abnormality determination process, as illustrated in FIG. 8, the monitoring device 100 first executes step S11. In step S11, for example, the application abnormality detection unit 108 determines whether the operating speed of the articulated robot 10 obtained from the robot monitoring unit 104 is outside of a reference range.

In a case where the operating speed of the articulated robot 10 is determined to be outside of the reference range in step S11, the monitoring device 100 executes step S12. In step S12, for example, the application abnormality detection unit 108 switches an abnormality flag (hereinafter, referred to as "operating speed flag") indicating that there is an abnormality in the operating speed of the articulated robot 10 from off to on. In a case where the operating speed of the articulated robot 10 is determined to be within the reference range in step S11, the monitoring device 100 does not execute step S12.

Subsequently, the monitoring device 100 executes step S13. In step S13, for example, the application abnormality detection unit 108 determines whether the position and the orientation of the discharge unit 41 with respect to the workpiece W is outside of a reference range.

In a case where the position and the orientation of the discharge unit 41 is determined to be outside of the reference range in step S13, the monitoring device 100 executes step S14. In step S14, for example, the application abnormality detection unit 108 switches an abnormality flag (hereinafter, referred to as "position and orientation flag") indicating that there is an abnormality in the position and the orientation of the discharge unit 41 from off to on. In a case where the position and the orientation of the discharge unit 41 is determined to be within the reference range in step S13, the monitoring device 100 does not execute step S14.

Subsequently, the monitoring device 100 executes step S15. In step S15, for example, the application abnormality detection unit 108 determines whether the gun side pressure measured by the pressure sensor 61 is outside of a reference range and determines whether the gun side temperature measured by the temperature sensor 64 is outside of a reference range.

In a case where at least one of the gun side pressure or the gun side temperature is determined to be outside of the reference range in step S15, the monitoring device 100 executes step S16. In step S16, for example, in a case where the gun side pressure is determined to be outside of the reference range, the application abnormality detection unit 108 switches an abnormality flag (hereinafter, referred to as "gun side pressure flag") indicating that there is an abnormality in the gun side pressure from off to on. In a case where the gun side temperature is determined to be outside of the reference range, the application abnormality detection unit 108 switches an abnormality flag (hereinafter, referred to as "gun side temperature flag") indicating that there is an abnormality in the gun side pressure from off to on. In a case where both the gun side pressure and the gun side temperature are determined to be within the reference range in step S15, the monitoring device 100 does not execute step S16.

Subsequently, the monitoring device 100 executes step S17. In step S17, for example, the application abnormality detection unit 108 determines whether the pump side pressure measured by the pressure sensor 62a (62b) is outside of a reference range and determines whether the pump side temperature measured by the temperature sensor 65 is outside of a reference range.

In a case where at least one of the pump side pressure or the pump side temperature is determined to be outside of the reference range in step S17, the monitoring device 100 executes step S18. In step S18, for example, in a case where the pump side pressure is determined to be outside of the reference range, the application abnormality detection unit 108 switches an abnormality flag (hereinafter, referred to as "pump side pressure flag") indicating that there is an abnormality in the pump side pressure from off to on. In a case where the pump side temperature is determined to be outside of the reference range, the application abnormality detection unit 108 switches an abnormality flag (hereinafter, referred to as "pump side temperature flag") indicating that there is an abnormality in the pump side pressure from off to on. In a case where both the pump side pressure and the pump side temperature are determined to be within the reference range in step S17, the monitoring device 100 does not execute step S18.

Subsequently, the monitoring device 100 executes step S19. In step S19, for example, the application abnormality detection unit 108 determines whether the driving force of the pump 51a (pump 51b) is outside of a reference range.

In a case where the driving force of the pump 51a is determined to be outside of the reference range in step S19, the monitoring device 100 executes step S20. In step S20, for example, the application abnormality detection unit 108 switches an abnormality flag (hereinafter, referred to as "pump driving force flag") indicating that there is an abnormality in the driving force of the pump 51a from off to on. In a case where the driving force of the pump 51a is determined to be within the reference range in step S19, the monitoring device 100 does not execute step S20.

In a case where none of the plurality of abnormality flags indicating an abnormality in the various state information described above are set to on, the application abnormality detection unit 108 does not detect an abnormality in the application state of the coating. In a case where any one of the plurality of abnormality flags is set to on, the application abnormality detection unit 108 detects an abnormality in the application state of the coating. Then, the monitoring device 100 ends the process for determining whether there is an abnormality. Note that, in step S15, the application abnormality detection unit 108 may determine whether one of the gun side pressure or the gun side temperature is outside of the corresponding reference range. In step S17, the application abnormality detection unit 108 may determine whether one of the pump side pressure or the pump side temperature is outside of the corresponding reference range.

### Process for Estimating Cause of Abnormality

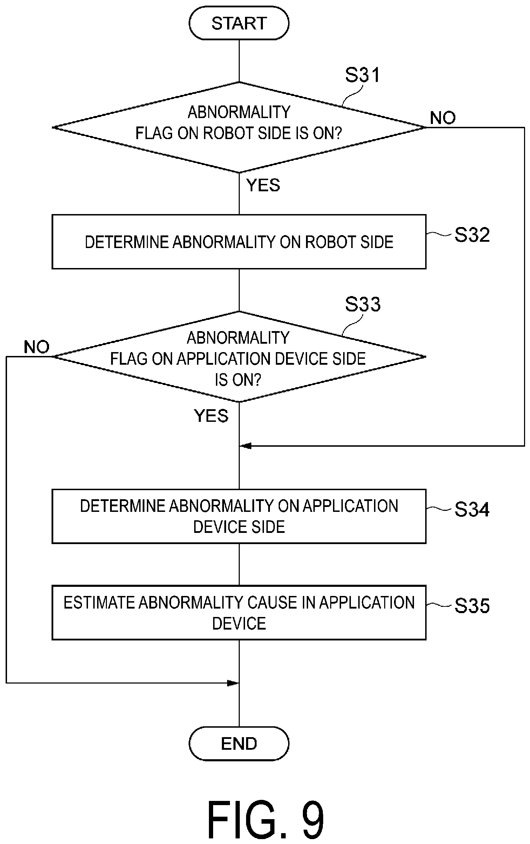

FIG. 9 is a flowchart illustrating an example of a process for estimating the cause of the abnormality in step S08. In the abnormality cause estimation process, as illustrated in FIG. 9, the monitoring device 100 first executes step S31. In step S31, for example, the abnormality cause estimation unit 116 determines whether an abnormality flag indicating that there is an abnormality in the state information of the articulated robot 10 is on. For example, the abnormality cause estimation unit 116 determines whether one of the operating speed flag relating to the operating speed of the articulated robot 10 or the position and orientation flag relating to the position and orientation of the discharge unit 41 is on.

In step S31, in a case where it is determined that any one of the abnormality flags relating to the state information of the articulated robot 10 is set to on, the monitoring device 100 executes step S32. In step S32, for example, the abnormality cause estimation unit 116 determines that the cause of the abnormality is in the articulated robot 10.

Subsequently, the monitoring device 100 executes step S33. In step S33, for example, the abnormality cause estimation unit 116 determines whether an abnormality flag indicating that there is an abnormality in the state information of the application device 40 is on. For example, the abnormality cause estimation unit 116 determines whether at least one of the gun side pressure flag relating to the gun side pressure, the gun side temperature flag relating to the gun side temperature, the pump side pressure flag relating to the pump side pressure, the pump side temperature flag relating to the pump side temperature, or the pump driving force flag relating to the torque value of the pump 51a is on.

In step S33, in a case where it is determined that none of the abnormality flags relating to the state information of the application device 40 are on, the monitoring device 100 does not execute steps S34 and S35. In step S33, in a case where it is determined that at least one of the abnormality flags relating to the state information of the application device 40 is on, the monitoring device 100 executes steps S34 and S35 in this order. Alternatively, in step S31, in a case where it is determined that none of the abnormality flags relating to the state information of the articulated robot 10 are set to on, the monitoring device 100 executes steps S34 and S35 in this order. Note that the process for estimating the cause of the abnormality in step S08 is executed in a case where any one of the abnormality flags is on. Thus, determining that none of the abnormality flags relating to the articulated robot 10 are on in step S31 means that at least one of the abnormality flags relating to the application device 40 is on.

In step S34, for example, the abnormality cause estimation unit 116 determines that the cause of the abnormality is in the application device 40. In step S35, for example, the abnormality cause estimation unit 116 estimates the cause of the abnormality in the application device 40. For example, according to whether there is an abnormality in the gun side pressure, the pump side pressure, and the torque value of the pump 51a, and the details of the abnormality, the abnormality cause estimation unit 116 may reference a table for estimation held in the estimation table holding unit 118 to estimate the cause of the abnormality and the section where the cause of the abnormality occurred in the application device 40. Then, the monitoring device 100 ends the process for estimating the cause of the abnormality.

### Effects of the Embodiment

As described above, the control system 70 includes: the application control device 80 configured to control the application device 40 such that the coating is discharged from the discharge unit 41; the robot control device 90 configured to cause the articulated robot 10 to change the position and the orientation of the discharge unit 41 such that the coating discharged by the discharge unit 41 is applied to the workpiece W; the application abnormality detection unit 108 configured to detect an abnormality in the application state of the coating on the basis of at least one of a state of the application device 40 or a state of the articulated robot 10; the application position calculation unit 106 configured to calculate the application position of the coating, on the workpiece W, applied from the discharge unit 41 on the basis of the state of the articulated robot 10; and the abnormality notification unit 120 configured to send a notification of the site of the abnormality in the application state on the workpiece W on the basis of a detection result of the abnormality in the application state and a calculation result of the application position.

According to this control system 70, a notification of the site of the abnormality in the application state of the coating on the workpiece W is sent. In this manner, sections where there is a likelihood that an abnormality has occurred in the application state on the workpiece W are narrowed down. This is useful in early detection of an abnormal section in the application state on the workpiece W.

The application abnormality detection unit 108 may detect the abnormality in the application state on the basis of the pressure in the application device 40. The pressure in the application device 40 affects the application state of the coating on the workpiece W. With the configuration described above, an abnormality in the application state of the coating can be more reliably detected by using the pressure in the application device 40.

The application abnormality detection unit 108 may detect the abnormality in the application state on the basis of the temperature in the application device 40. The temperature in the application device 40 affects the application state of the coating on the workpiece W. With the configuration described above, an abnormality in the application state of the coating can be more reliably detected by using the temperature in the application device 40.

The application abnormality detection unit 108 may detect the abnormality in the application state on the basis of the position and the orientation of the discharge unit 41 with respect to the workpiece W. The position and the orientation of the discharge unit 41 with respect to the workpiece W affect the application state of the coating on the workpiece W. With the configuration described above, an abnormality in the application state of the coating can be more reliably detected by using the position and the orientation of the discharge unit 41 with respect to the workpiece W.

The application abnormality detection unit 108 may detect the abnormality in the application state on the basis of the operating speed of the articulated robot 10. The operating speed of the articulated robot 10 affects the application state of the coating on the workpiece W. With the configuration described above, an abnormality in the application state of the coating can be more reliably detected by using the operating speed of the articulated robot 10.

The control system 70 may further include the application state estimation unit 114 configured to estimate the state of the coating applied to the workpiece W on the basis of the state of the application device 40 and the state of the articulated robot 10. The abnormality notification unit 120 may further send a notification of the state of the coating at the site of the abnormality on the workpiece W on the basis of the detection result of the abnormality in the application state and the estimation result of the state of the coating. According to this configuration, a notification of the state of the coating at a site where there is a likelihood that an abnormality has occurred is sent, and thus the details of the abnormality to be searched for in the workpiece after application are easily narrowed down. For example, in a case where a search is performed on the basis of a visually observable image or a captured image, which application states should be searched for can be narrowed down before performing a search. This is also useful in early detection of an abnormal section in the application state on the workpiece W.

The application state estimation unit 114 may estimate the state of the coating applied to the workpiece W on the basis of the pressure in the application device 40 and the operating speed of the articulated robot 10. The pressure in the application device 40 and the operating speed of the articulated robot 10 affect the state of the coating applied to the workpiece W. With the configuration described above, the state of the coating on the workpiece W can be estimated with better accuracy by using the information relating to the pressure in the application device 40 and the operating speed of the articulated robot 10.

The control system 70 may further include the abnormality cause estimation unit 116 configured to estimate the cause of the abnormality in the application state on the basis of at least one of the state of the application device 40 or the state of the articulated robot 10. The abnormality notification unit 120 may further send a notification of the cause. With this configuration, in addition to the section where the abnormality occurred in the workpiece W, a notification of the cause of the abnormality in the application device 40 or the articulated robot 10 is sent. This is useful for performing maintenance of the device at an early stage.

The abnormality cause estimation unit 116 may further estimate whether the cause is in the application device 40 or the articulated robot 10 on the basis of the state of the application device 40 and the state of the articulated robot 10. The abnormality notification unit 120 may further send a notification of whether the cause is in the application device 40 or the articulated robot 10. With this configuration, a notification of whether the cause of the abnormality in the application state of the coating on the workpiece is in the application device 40 or the articulated robot 10 is sent. This is further useful for performing maintenance of the device at an early stage.

The abnormality cause estimation unit 116 may further estimate the section where the cause occurred in the application device 40 on the basis of states at a plurality of sections in the application device 40. The abnormality notification unit 120 may further send a notification of the section where the cause occurred. With this configuration, in addition to the cause of the abnormality in the application state of the coating on the workpiece W, a notification of the section where the cause of the abnormality occurred in the application device 40 is sent. This is useful for performing maintenance of the application device 40 at an early stage.

The application device 40 may further include the liquid feeding pipe 54 configured to guide the coating to the discharge unit 41, and the pumps 51a, 51b configured to supply the coating to the discharge unit 41 via the liquid feeding pipe 54. The abnormality cause estimation unit 116 may estimate the section where the cause occurred on the basis of the pressure at a plurality of sections located at different positions in the direction aligned with the liquid feeding pipe 54. In this case, because the pressure at a plurality of sections in the application device 40 is used, the section where the cause of the abnormality occurred in the application device 40 can be easily estimated.

The abnormality cause estimation unit 116 may estimate the section where the cause occurred also on the basis of the drive state of each of the pumps 51a, 51b. In this case, because the drive state of each of the pumps 51a, 51b is also used, the section where the cause of the abnormality occurred can be more specifically estimated.

The monitoring device 100 described above includes:
the application device monitoring unit 102 configured to acquire a state of the application device 40 including the discharge unit 41 configured to discharge the coating; the robot monitoring unit 104 configured to acquire a state of the articulated robot 10 configured to change the position and the orientation of the discharge unit 41 such that the coating discharged by the discharge unit 41 is applied to the workpiece W; the application abnormality detection unit 108 configured to detect an abnormality in an application state of the coating on the basis of at least one of the state of the application device 40 or the state of the articulated robot 10; the application position calculation unit 106 configured to calculate the application position of the coating, on the workpiece W, applied from the discharge unit 41 on the basis of the state of the articulated robot 10; and the abnormality notification unit 120 configured to send a notification of the site of the abnormality in the application state on the workpiece W on the basis of a detection result of the abnormality in the application state and a calculation result of the application position.

The monitoring device 100 is particularly effective in a case where application on the workpiece W is complex. Examples of a complex application include a case where the workpiece W is a panel of a vehicle body and a case where the coating is a vibration damping material or a sealant. In this case, detecting an abnormality by a visual inspection or an image inspection of the application state of the coating applied to the workpiece W and detecting the abnormal section are likely to take time. In contrast, with the monitoring device 100 described above, an abnormality is detected on the basis of an execution result of application by the device (state of the device at the time of coating discharge) instead of the coating on the workpiece W, and further a notification is sent of an abnormality detection result including the site of the abnormality. Thus, even in a case where the application is complex, early detection of the section estimated to have an abnormality is possible.

An embodiment has been described above. However, the present invention is not necessarily limited to the embodiment described above, and various modifications are possible without departing from the gist of the present invention.

### Modified Example 1

In the example described above, the application abnormality detection unit 108 detects an abnormality in the application state by comparing values indicated by various information with reference ranges. However, the method for detecting an abnormality in the application state is not limited to this. The application abnormality detection unit 108 may detect an abnormality in the application state of the coating by using, for example, an estimation model built by machine learning. In this case, as illustrated in FIG. 3, the control system 70 may further include a training device 200 (training unit), and the monitoring device 100 may further include, as a functional module, an accumulation unit 126 and a performance status acquisition unit 128.

The accumulation unit 126 accumulates performance information in which information indicating at least one of the state of the application device 40 or the state of the articulated robot 10 (hereinafter, referred to as "state information") and the application state of the coating on the workpiece W based on the state indicated by the state information are associated with each other. For example, the accumulation unit 126 acquires, as the state information, the pressure in the application device 40 from the application device monitoring unit 102 and the operating speed of the articulated robot 10 from the robot monitoring unit 104.

The performance status acquisition unit 128 acquires information indicating the actual application state of the coating on the workpiece W based on the state information. The information indicating the actual application state is, for example, information indicating whether there is actually an abnormality in the application state of the coating. The monitoring device 100 may include an operation device, and the performance status acquisition unit 128 may acquire information indicating the actual application state via input from an operator. The accumulation unit 126 associates the information indicating the actual application state obtained from the performance status acquisition unit 128 with the state information, and outputs the associated information as the performance information to the training device 200.

The training device 200 is a device that builds an estimation model by machine learning. The training device 200 may be disposed at a location away from the articulated robot 10 and the application device 40 via a network line (in a cloud). The training device 200 includes, as functional modules, a storage unit 202 and a model building unit 204. The storage unit 202 stores accumulation information obtained from the accumulation unit 126. In this manner, the accumulation unit 126 accumulates the performance information described above.

The model building unit 204 builds the estimation model by machine learning by using the accumulation information stored in the storage unit 202. The estimation model is configured to output the application state of the coating on the workpiece W according to input state information. The output from the estimation model may be a determination result of abnormality indicating whether the application state of the coating is abnormal or normal. In this case, the estimation model determines whether there is an abnormality in the application state of the coating. The application abnormality detection unit 108 of the monitoring device 100 may, at the evaluation stage, detect an abnormality in the application state of the coating by inputting the information state obtained from the application device monitoring unit 102 and the robot monitoring unit 104 into the estimation model obtained from the model building unit 204 and obtaining a determination result of the model (output from the estimation model).

An example of the estimation model includes a model that determines whether there is an abnormality in the application state of the coating by calculating reference values indicating a normal range on the basis of the performance information at the training stage, and then comparing the reference values with the value indicated by the state information at the evaluation stage. Instead of a model that determines whether there is an abnormality, a model may be used that outputs a reference range indicating a normal state as the estimation model.

Alternatively, as an estimation model for determining whether there is an abnormality, a neural network may be used that uses the various information included in the state information as input vectors and outputs whether there is an abnormality in the application state of the coating. The neural network includes an input layer, one or more intermediate layers, and an output layer. The input layer outputs the input vector directly to the next intermediate layer. The intermediate layer converts input from one previous layer using an activation function and outputs the result to the next layer. The output layer converts the input from the intermediate layer furthest from the input layer using an activation function and outputs the conversion result.

The training device 200 includes a circuit 230 as a hardware configuration. The circuit 230 includes a processor 231, a memory 232, a storage 233, and a communication port 234. The storage 233 is a non-volatile storage medium (for example, a flash memory) that is readable by a computer. The storage 233 stores programs and data for causing the training device 200 to store the accumulation information and build the estimation model by machine learning on the basis of the accumulation information. The storage 233 includes a storage area for configuring each functional module described above and a storage area allocated to the storage unit 202.

The memory 232 temporarily stores programs loaded from the storage 233 and calculation results and the like obtained by the processor 231. The processor 231 implements each functional module of the training device 200 by executing the programs described above in cooperation with the memory 232. The communication port 234 communicates with the monitoring device 100 (communication port 134) via a communication network N in accordance with commands from the processor 231. The communication network N may be the Internet or a private network.

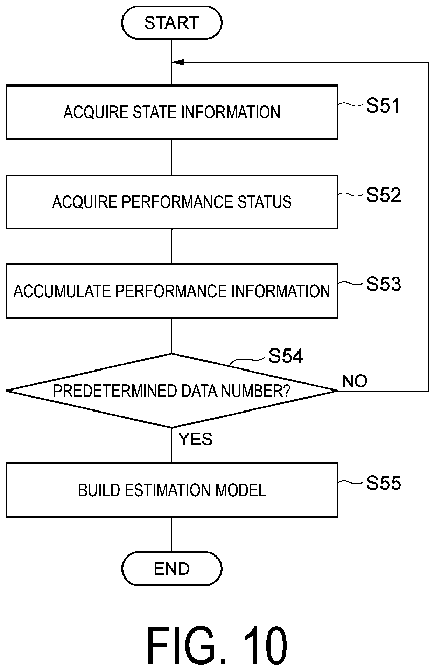

FIG. 10 is a flowchart illustrating a model building process (training process). In the model building process, as illustrated in FIG. 10, the control system 70 executes step S51. In step S51, for example, the accumulation unit 126 of the monitoring device 100 acquires the state information from the application device monitoring unit 102 and the robot monitoring unit 104.

Subsequently, the control system 70 executes steps S52 and S53 in this order. In step S52, for example, the accumulation unit 126 acquires, from the performance status acquisition unit 128, the information indicating the actual application state of the coating based on the state indicated by the state information obtained in step S51. For example, the accumulation unit 126 acquires information indicating whether there is an abnormality in the application state of the coating as the information indicating the actual application state of the coating. In step S53, for example, the accumulation unit 126 associates the state information obtained in step S51 and the information indicating the actual application state of the coating obtained in step S52 with each other and accumulates the associated performance information in the storage unit 202 of the training device 200.

Subsequently, the control system 70 executes step S54. In step S54, for example, the control system 70 determines whether the number of pieces of the accumulated performance information has exceeded a predetermined data number. In a case where it is determined that the number of pieces of the performance information has not exceeded the predetermined data number, the control system 70 (monitoring device 100) repeats steps S51 to S53.

In step S54, in a case where it is determined that the number of pieces of the performance information has exceeded the predetermined data number, the control system 70 executes step S55. In step S55, for example, the model building unit 204 of the training device 200 builds an estimation model by machine learning on the basis of the performance information stored in the storage unit 202. Then, the control system 70 ends the series of estimation model building processes.

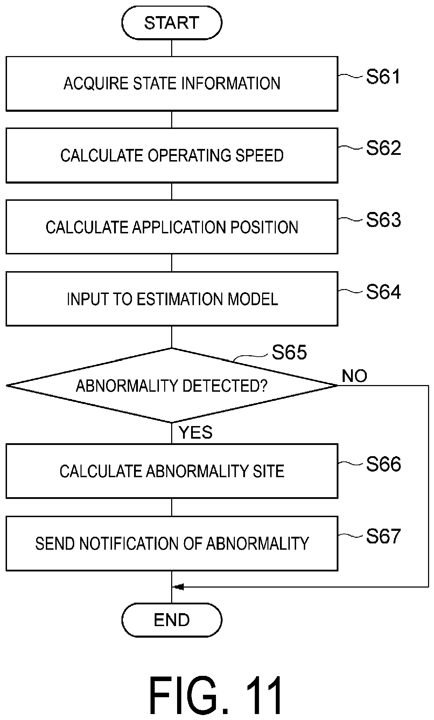

FIG. 11 is a flowchart illustrating an example of a process for detecting an abnormality using an estimation model (evaluation process). In this abnormality detection process, as illustrated in FIG. 11, the monitoring device 100 first executes steps S61 to S63. Steps S61 to S63 are executed in a similar manner to steps S01 to S03.

Subsequently, the monitoring device 100 executes steps S64 and S65 in this order. In step S64, for example, the application abnormality detection unit 108 detects an abnormality in the application state of the coating on the basis of the state information obtained in step S61 and the estimation model. For example, the application abnormality detection unit 108 inputs the state information obtained in steps S61 and S62 into the estimation model and then detects an abnormality in accordance with an abnormality determination result obtained from the estimation model. Subsequently, the monitoring device 100 executes steps S65 to S67 in this order. Steps S65 to S67 are each executed in a similar manner to steps S05, S06, and S09.

As described above, the control system 70 may further include the accumulation unit 126 configured to accumulate performance information in which state information indicating at least one of the state of the application device 40 or the state of the articulated robot 10, and the application state on the workpiece W based on the state indicated by the state information are associated with each other. The application abnormality detection unit 108 may detect an abnormality in the application state on the basis of the estimation model built to output the application state on the workpiece W in accordance with input state information on the basis of the accumulation information accumulated by the accumulation unit 126. In this case, because the estimation model built on the basis of the accumulated performance information is used, an abnormality in the application state of the coating can be detected more accurately.

The control system 70 may further include the training device 200 including the storage unit 202 configured to store the accumulation information and the model building unit 204 configured to build the estimation model by machine learning on the basis of the accumulation information stored in the storage unit 202. In this case, because more data is used, the application state of the coating can be detected more accurately.

### Modified Example 2

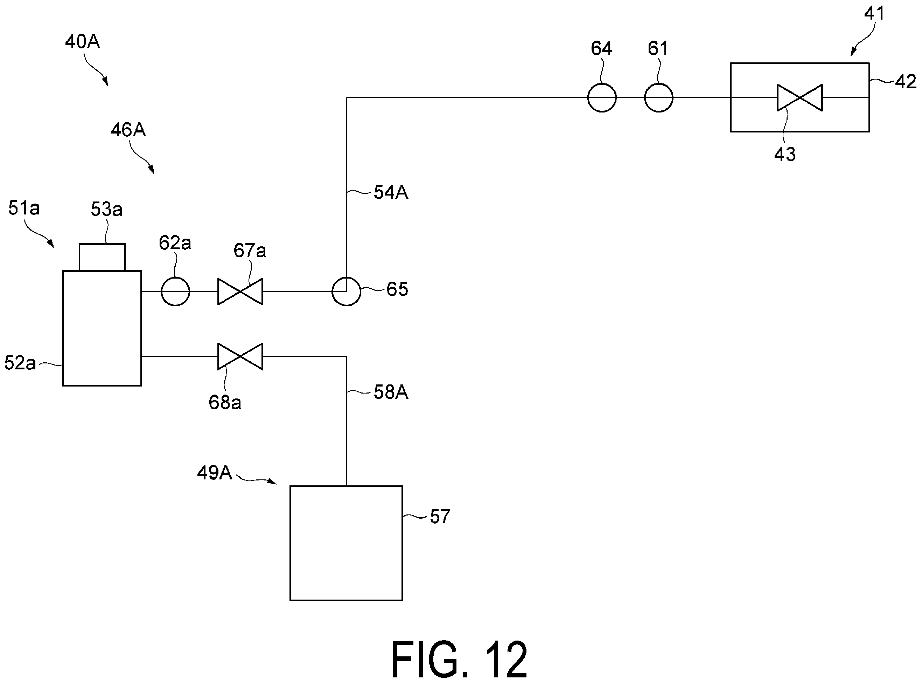

As illustrated in FIG. 12, the application system 1 may include an application device 40A instead of the application device 40. The application device 40A differs from the application device 40 in that a single pump is used to feed the coating to the discharge unit 41. Specifically, the application device 40A differs from the application device 40 in that the application device 40A includes a pressure feeding unit 46A instead of the pressure feeding unit 46, includes a supply unit 49A instead of the supply unit 49, and does not include the pressure sensor 62b.

The pressure feeding unit 46A differs from the pressure feeding unit 46 in that the pressure feeding unit 46A does not include the pump 51b and the delivery valve 67b and includes a liquid feeding pipe 54A instead of the liquid feeding pipe 54. The liquid feeding pipe 54A, for example, connects the discharge unit 41 and the pump 51a without branching partway along. The supply unit 49A differs from the supply unit 49 in that the supply unit 49A does not include the return pipe 59, the circulation valve 69, and the suction valve 68b.

Even in a case where the application system 1 includes the application device 40A, according to the control system 70, a notification of the site of the abnormality in the application state of the coating on the workpiece W is sent. In other words, similar to a case where the application system 1 includes the application device 40, this configuration is useful in early detection of an abnormal section in the application state on the workpiece W.

### Reference Signs List

10 Articulated robot
40 Application device
41 Discharge unit
51a, 51b Pump
54 Liquid feeding pipe
70 Control system
80 Application control device
90 Robot control device
100 Monitoring device
102 Application device monitoring unit
104 Robot monitoring unit
106 Application position calculation unit
108 Application abnormality detection unit
114 Application state estimation unit
116 Abnormality cause estimation unit
W Workpiece

## Claims

1. A control system (70), comprising:
a discharge control unit (80) configured to control an application device (40) such that a coating is discharged from a discharge unit (41);
a robot control unit (90) configured to cause an articulated robot (10) to change a position and an orientation of the discharge unit (41) such that the coating discharged by the discharge unit (41) is applied to a workpiece (W);
an application abnormality detection unit (108) configured to detect an abnormality in an application state of the coating on the basis of at least one of a state of the application device (40) or a state of the articulated robot(10);
an application position calculation unit (106) configured to calculate an application position of the coating, on the workpiece (W), applied from the discharge unit (41) on the basis of the state of the articulated robot (10); and
an abnormality notification unit (120) configured to send a notification of a site of the abnormality in the application state on the workpiece (W) on the basis of a detection result of the abnormality in the application state and a calculation result of the application position.

2. The control system (70) according to claim 1, wherein
the application abnormality detection unit (108) detects the abnormality in the application state on the basis of a pressure in the application device (40).

3. The control system (70) according to claim 1 or 2, wherein
the application abnormality detection unit (108) detects the abnormality in the application state on the basis of a temperature in the application device (40).

4. The control system (70) according to any one of claims 1 to 3, wherein
the application abnormality detection unit (108) detects the abnormality in the application state on the basis of a position and an orientation of the discharge unit (41) with respect to the workpiece (W).

5. The control system (70) according to any one of claims 1 to 4, wherein
the application abnormality detection unit (108) detects the abnormality in the application state on the basis of an operating speed of the articulated robot (10).

6. The control system (70) according to any one of claims 1 to 5, further comprising:
an application state estimation unit (114) configured to estimate a state of the coating applied to the workpiece (W) on the basis of the state of the application device (40) and the state of the articulated robot (10), wherein
the abnormality notification unit (120), on the basis of a detection result of the abnormality in the application state and an estimation result of the state of the coating, further sends a notification of the state of the coating at the site of the abnormality on the workpiece (W).

7. The control system (70) according to claim 6, wherein
the application state estimation unit (114) estimates the state of the coating applied to the workpiece (W) on the basis of a pressure in the application device (40) and an operating speed of the articulated robot (10).

8. The control system (70) according to any one of claims 1 to 7, further comprising:
an abnormality cause estimation unit (116) configured to estimate a cause of the abnormality in the application state on the basis of at least one of the state of the application device (40) or the state of the articulated robot (10), wherein
the abnormality notification unit (120) further sends a notification of the cause.

9. The control system (70) according to claim 8, wherein
the abnormality cause estimation unit (116) further estimates whether the cause is in the application device (40) or the articulated robot (10) on the basis of the state of the application device (40) and the state of the articulated robot (10), and
the abnormality notification unit (120) further sends a notification of which one of the application device (40) and the articulated robot (10) the cause is in.

10. The control system (70) according to claim 8 or 9, wherein
the abnormality cause estimation unit (116) further estimates a section where the cause occurs in the application device (40) on the basis of states at a plurality of sections in the application device (40), and
the abnormality notification unit (120) further sends a notification of the section where the cause occurs.

11. The control system (70) according to claim 10, wherein
the application device (40) further includes a liquid feeding pipe (54) configured to guide the coating to the discharge unit (41) and a pump (51a, 51b) configured to supply the coating to the discharge unit (41) via the liquid feeding pipe (54), and
the abnormality cause estimation unit (116) estimates a section where the cause occurs on the basis of pressure at the plurality of sections located at different positions in a direction aligned with the liquid feeding pipe (54).

12. The control system (70) according to claim 11, wherein
the abnormality cause estimation unit (116) estimates the section where the cause occurs also on the basis of a drive state of the pump (51a, 51b).

13. The control system (70) according to any one of claims 1 to 12, further comprising:
an accumulation unit (126) configured to accumulate performance information in which state information indicating at least one of the state of the application device (40) or the state of the articulated robot (10) and the application state on the workpiece (W) based on a state indicated by the state information are associated with each other, wherein
the application abnormality detection unit (108) detects the abnormality in the application state on the basis of an estimation model built to output the application state on the workpiece (W) in accordance with input of the state information on the basis of accumulation information accumulated by the accumulation unit (126).

14. The control system (70) according to claim 13, further comprising:
a training unit (200) including
a storage unit (202) configured to store the accumulation information, and
a model building unit (204) configured to build the estimation model by machine learning on the basis of the accumulation information stored in the storage unit (202).

15. A monitoring device (100), comprising:
a device state acquisition unit (102) configured to acquire a state of an application device (40) including a discharge unit (41) configured to discharge a coating;
a robot state acquisition unit (104) configured to acquire a state of an articulated robot (10) configured to change a position and an orientation of the discharge unit (41) such that the coating discharged by the discharge unit (41) is applied to a workpiece (W);
an application abnormality detection unit (108) configured to detect an abnormality in an application state of the coating on the basis of at least one of the state of the application device (40) or the state of the articulated robot (10);
an application position calculation unit (106) configured to calculate an application position of the coating, on the workpiece (W), applied from the discharge unit (41) on the basis of the state of the articulated robot (10); and
an abnormality notification unit (120) configured to send a notification of a site of the abnormality in the application state on the workpiece (W) on the basis of a detection result of the abnormality in the application state and a calculation result of the application position.

16. A monitoring method, comprising:
acquiring a state of an application device (40) including a discharge unit (41) configured to discharge a coating;
acquiring a state of an articulated robot (10) configured to change a position and an orientation of the discharge unit (41) such that the coating discharged by the discharge unit (41) is applied to a workpiece (W);
detecting an abnormality in an application state of the coating on the basis of at least one of the state of the application device (40) or the state of the articulated robot (10);
calculating an application position of the coating, on the workpiece (W), applied from the discharge unit (41) on the basis of the state of the articulated robot (10); and
sending a notification of a site of the abnormality in the application state on the workpiece (W) on the basis of a detection result of the abnormality in the application state and a calculation result of the application position.

17. A program for causing a device to execute the monitoring method according to claim 16.
